# EUROPEAN PATENT APPLICATION

(11) **EP 0 910 194 A2**
(43) Date of publication of application: **21.04.1999**
(21) Application number: 98117635.7
(22) Date of filing: 17.09.1998
(51) Int. Cl.: H04L 12/26, H04Q 7/34

(54) **Network test system**

(30) Priority: 24.09.1997 US 936350
(71) Applicant: AT&T WIRELESS SERVICES, INC., Kirkland, WA 98033-9760 (US)
(72) Inventor: Lynch, Thomas Josef, Bedminster, New Jersey 07921 (US); Turner, Mark Lee, Budd Lake, New Jersey 07828 (US)
(74) Representative: Modiano, Guido, Dr.-Ing.

(57) **Abstract**

A network test system for monitoring and simulating a network and for testing the performance of a network device. The network test system comprising a computer in communications with the network, simulation software for emulating the network, formatting messages and emulating protocols, and a clock in substantial synchronization to a remote clock which is in communications with a remote computer and simulation software. The network test system allows for the accumulation of network performance data which can be used to test the performance characteristics of a device under test and to monitor and recommend to a network switch alternative switching patterns.

## Description

### Technical Field

This invention relates to the field of communications networks, and more specifically to the area of network simulation and the testing of individual communication network components.

### Background of the Invention

Over the last twenty-five years, communication networks have become increasingly complex in the wake of the personal computer, the ever increasing popularity of the Internet, and the move of multinational organizations toward global networking. Together with this, the change and advancement in network technologies and the varied forms of topologies that are currently available, necessitate that network designers consider and conduct advanced planning and network testing. In the past, designers may have been able to do without extensive testing when faced with ten or less network nodes. However, in the advent of local area networks having hundreds of nodes, the failure to extensively test network components before they are mainstreamed could have devastating financial consequences.

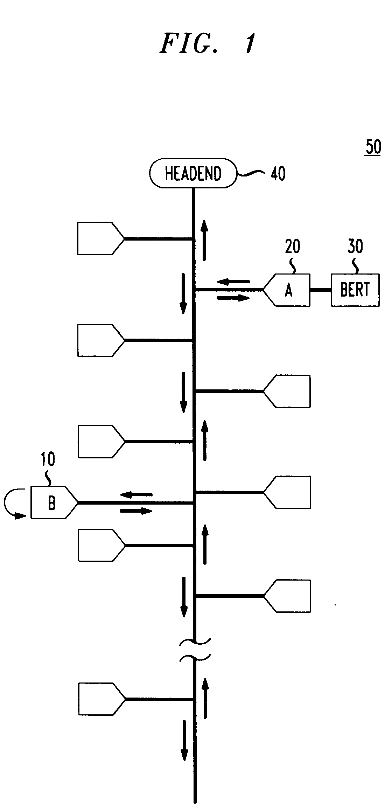

In the early years, component testing and network performance analysis were minimal at best. In perhaps one of the first commercial data networks of its kind, a New York based cable TV company, in the early 1980's, conducted basic end-to-end modem testing on its shared midsplit network. RF cable modems were used to divide the RF spectrum and to occupy designated channels over which data would be transmitted. As shown in Fig. 1, a subscriber having two locations A & B, would have an RF data modem installed at both sites. Data transmitted from modem 20 at site A would operate at for example 7 MHz and be transmitted over network 50 to headend 40 where it would undergo frequency translation. Data sent over the 7 MHz RF carrier would be translated to the upper frequency band by a fixed network frequency offset of 156 MHz. Data on the 7 MHz carrier would then be translated to a downstream frequency of 163 MHz. The modem 10 at site B, by design, would be tuned to 163 MHz in order to receive the transmitted data. In complementary fashion, modem 10 was set to transmit at 7.1 while modem 20 was set to receive at 163.1 MHz.

To ensure network performance and channel reliability, the data link between sites A & B was tested, in a digital loop back mode of operation. A bit error rate test set (BERT) 30, was used to interface with modem 20 and to generate a known stream of data. The test data would then be sent to the headend and then received by modem 10 as described above. However, the demodulated digital data at site B would be looped back or used as an input to modem 10 and once again retransmitted back to modem 20. The bit error test set 30 would then capture the received data and conduct a data bit comparison between the sent and received data streams. Bit error rate performance calculations would then be made based on the number of errors received over a known number of bits transmitted. Bit-error rates of 10⁻⁷ (one in ten million) were deemed at the time to be an acceptable rate of performance. As evident, the early networks were simple and primarily concerned with link network performance and channel reliability and less concerned with data routing, delay times, and out of sequence transmission.

Although the above method of in-network testing of a network component satisfied the performance needs at the time, mere loop back testing in today's network environment is insufficient to assess component performance and reliability. In today's networks, the level of network testing must keep pace with the increased level of network complexity. One-way packet delay, packet loss and packet shuffle are but a few of the performance factors necessary in assessing component performance and reliability. Accordingly, network designers are turning to network simulation as an added tool to in-network testing, to test their designs and carry out performance studies. This is especially so with the advent of high speed networks (e.g., ATM switching) which are very costly to implement and which are still undergoing standardization.

Software network simulation allows the network designer to create a model of the operating environment and to test designs for possible bottlenecks, system outages, network degradation and overall performance before implementing a network design. Alternatively, if the network already exists, a network designer can use simulation software to answer "what if" type situations-for example, how will equipment added in or taken out of a network affect an already operational network. In addition, such software may also be used to mimic and predict the responsiveness and operational compatibility of a particular network component.

In recognition of the need for further advances in network simulation, new test systems have emerged. U.S. Patent No. 5,394,540 discloses a system for testing a network component by selectively modifying messages received from a component under test. In an embodiment of that invention, a component under test is monitored for receiving specific types of communication. An interface processor receives a message and translates the received message into a format processable by other network components before it is forwarded to a message processor. If the message received is of the type that requires a response from a simulated network component, the message is forwarded to a simulator which will simulate a response for components in the network which interact with the device under test (DUT). To examine the device under test, the responding message is examined, changed, substituted or deleted. Thereafter, the responding message is translated back into a processable format and forwarded back to the DUT. Accordingly, the simulator, at least on a laboratory basis, is able to mimic the anticipated response of network components and to test the performance of a particular component under specific and yet repeatable circumstances.

Despite advances over the last fifteen years, there remains the problem of testing network components in real time or near real-time environments. In particular, Internet equipment presents a challenge to network testing in that no currently available system is capable of simulating the Internet environment and to evaluate and ascertain an acceptable level of component performance.
Unfortunately, testing methodologies have not kept pace with the Internet explosion. At the present time, only an approximate two-way delay time can be provided. Data packets at a remote location are stamped as part of the Internet Control Message Protocol (ICMP) with a timestamp which is compared with the time the message is actually received. In such testing, only the value in milliseconds is known. Such data, however is of limited value since no accurate measure of delay time is know with reference to an international time standard.

In particular, there is no current method of determining one-way delay on the Internet, since no method is available to synchronize remote nodes to an accurate international time. Currently, information regarding the Internet environment, such as packet loss and propagation delays come from either studies from different educational facilities or from limited data from nodes and Internet servers. However, such information is neither real-time nor near real-time data, nor synchronized to an accurate international time standard. Accordingly, there is a need for a system to simulate one-way packet loss, one-way propagation delay, two-way packet loss, two-way propagation delay and packet shuffle (e.g., packets arriving out of order or out of sequence) on a real or near real-time basis.

### Summary of the Invention

This need is satisfied by a network test system for testing one or more network components comprising a network simulator for emulating network message formats and protocols, and an accurate synchronized clock for use as a time base reference in the calculation of delays on a network.

It is therefore an object of the present invention to simulate a network environment and to establish a network performance profile for a network component.

Another object of the invention is to provide reliable one way network performance data from a remote location to an origination site.

A further object is to provide a synchronized time base reference for the nodes of a network so as to establish a reliable means of determining network delivery times and data propagation delays.

A still further object of the present invention is to monitor and enhance the performance of a network by communicating with a network switch and by determining and recommending alternative routing patterns based on known or measured delays.

Another object of the present invention is to establish a network performance profile which can be used to test the performance of a network component in a laboratory environment and without the need for in-network testing.

These and other objects are realized by a network test system in which test messages are sent over a network and the responses analyzed. In a preferred embodiment of the present invention, an originating site initiates a series of test messages which a remote site having a similar network test system is able to receive, analyze, respond, and report the performance of the network during the transmission and receipt of such data. The network test system comprises a computer and related software to format messages and to follow established network communications protocol. Initially, the originating site requests the remote location to synchronize its clock and to reestablish a time base reference which will be used to calculate time based transmission measurements. Once the originating and remote sites are substantially synchronized to a reference clock, the originating site conducts a series of one and two way test sequences while in communications with the remote location- including propagation delay, data loss, and data shuffle. Network performance data received by the originating site is then analyzed, stored and made readily available for out-of- network testing (i.e., made available to simulate the network environment while testing network components in a laboratory environment).

In another preferred embodiment, the network test system in addition to accumulating network performance data, communicates with the network switch and determines better routing patterns based on time delays, data loss and data shuffle which will enhance the overall performance of the network.

### Brief Description of the Drawings

These and other features of the present invention will be best understood by reference to the following detailed description of a preferred embodiment of the invention, taken in conjunction with accompanying drawings, in which:
FIG. 1 is a diagram of an RF Midsplit data network;
FIG. 2 is diagram showing the network test system on the Internet according to the present invention;
FIG. 3 is a diagram of the message layout of a time sync request used to synchronize local and remote clocks;
FIG. 4 is a diagram of the message layout of a reply to a time synch request as shown in FIG. 3;
FIG. 5 is a diagram of the message layout of an Echo Request;
FIG. 6 is a diagram of the message layout of an Echo Reply in response to the Echo Request as shown in FIG. 5;
FIG. 7 is a diagram of the message layout of a Timestamp Request;
FIG. 8 is a diagram of the message layout of a Timestamp Reply in response to the Timestamp Request as shown in FIG. 8;
Fig. 9 is a diagram of the Echo and Timestamp sequence between an originating and remote site; and
FIG. 10 is a diagram of the network test system in communication with a network switch according to an embodiment of the present invention.

### Detailed Description

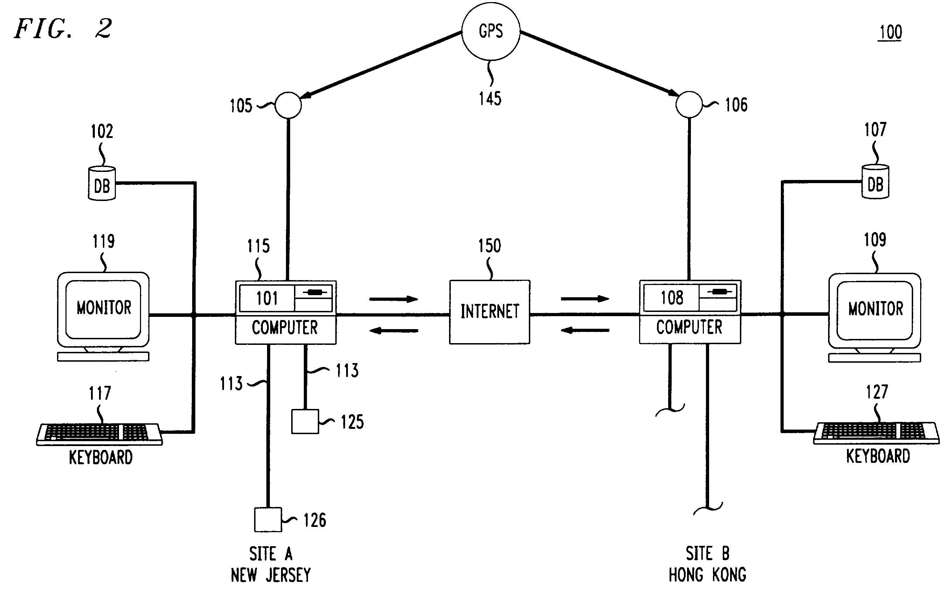

Referring to Fig. 2, the network test and simulation system 100 described herein is suitable for any operating system capable of supporting software which simulates a network environment. However, in the embodiment as shown in Fig.2, computer 101 is an HP Vectra having an Intel based CPU and a Microsoft DOS 6.22 Operating System. Computer 101 in addition to standard equipment such as a keyboard 117, monitor 119 and data com ports 115, also comprises, one or more network simulation ports 113. Moreover, the computer's CPU, memory storage (hard disk, floppy and RAM), memory access time and internal clock should be selected or modified such that the system is optimized to simulate a near real-time operating environment.

Simulation software 102 may be developed to meet the particular needs of the device under test 125, 126 and the network operating environment or it may include some the readily available off the shelf software packages such as Simscript II.5, Opnet and Arena. Regardless, the simulation software should preferably be one which does not add appreciable delays due to CPU processing time or data retrieval time so as to negate or minimize the effects of operating in a real-time or near real-time environment. Moreover, the software used should support a high throughput to support and simulate specific applications over the operating network. For example, in an Internet environment, the selected software should be one capable of simulating the Internet for voice, fax and image data transmission. Furthermore, the core of the simulation software should be developed and optimized for speed and very low propagation delay so as to ensure full control of the core program and CPU. Moreover, memory storage and access times should be optimized so to minimize retrieval delays. In particular, the size of Random Access Memory (RAM) should preferably be maximized so as minimize the need for additional access to a storage device such as a hard disk or a floppy- and thereby increase processing time. Preferably, during tests on a network component or during the acquisition of network performance data, the test system should avoid the need for access to data resident on fixed storage devices such as hard disks, floppys, and Cds by primarily relying on the data resident in RAM. For example, the test software should be developed such that software componets (i.e., packet driver interfaces) are readily available on RAM and operate without appreciable delay.

A coordinated universal time clock 105 (UTC Clock) is connect to computer 101 and is used as a time base reference for processing data and under certain circumstances as a basis for setting an interrupt handler to work with the CPU's internal clock. In the present embodiment, clock 105 is a Chrono-log GPS K-Series Clock/Timer capable of establishing a reference time from one of the twenty-four (24) currently available Global Positioning Satellites around the world. Through the use of these satellites, clock 105 is able to capture the broadcasted NIST (National Institute of Standards) time, for example, to within an accuracy of 100 nanoseconds. The captured time is then stored in the clock and used as a time base reference for computer 101 or any other computer used to test a network component. The clock is then able to store and report the time to an accuracy to within 10 ms. As used herein, reference to real-time or near real time ("real time") shall mean a synchronization to a reference clock within at least 10 ms (milli-seconds) In the event that any test location is unable to have at least one satellite in view, clock 105 should be able to maintain the reference time to within 10 milli-seconds over a span of four days. Of course the level of accuracy necessary will depend largely on the test applications and network environment. However, in the present embodiment of the invention, the simulation software 102 queries the clock, for updates to ensure that the time base reference is still accurate to within the required operating range. In the event that the clock 105 determines that communications with at least one of the satellites has not occurred, the time data stream to computer 101 is flagged with a special character to denote a communications failure with GPS satellite 145. The receipt of such a character may for example, initiate the use of historical data and the setting of other testing parameters in order to simulate the network environment and acquire performance data of a DUT.

In an embodiment of the invention as shown in Fig.2, the network test and simulation system is used in a local simulation mode wherein real-time data is acquired by transmitting data over the network of interest and capturing and storing a characteristic profile of the data sent over the chosen network. It should however be understood that although the Internet shall be used as the network for illustrative purposes, network simulation and component testing as disclosed and claimed herein may also be applied to other types of networks such as X.25, ATM networks, virtual switched data networks, Frame Relay, private line digital voice and other switched circuit modes etc.

In order to test a network component, network performance data is first acquired by sending traffic over the network, at various times and under varying operating circumstances. Once performance data is acquired, the data is used to simulate an operating environment and to test the network component. As shown in Fig. 2, a device under test 125 is connected to computer 101 through network simulator port 113. In addition, computer 101 through one of its data com ports 115 accesses the Internet 150 in any of the various known access methods (i.e., T-1, LAN gateways etc.) At a remote site B such as Hong Kong a similar network simulation system is configured substantially as shown in Fig. 2. At site B, the system comprises computer 108 connected to a clock 106 capable of synchronizing its time base reference to within 100 ns (nanoseconds) of the NIST signal so as to be substantially in synchronization with clock 105 (capable of storing and reporting the time to an accuracy to within 10 ms). Preferably, just prior to the testing of a network component, clocks 105 and 106 refresh their respective time base references from the GPS broadcast signal emanating from satellite 145. However, it should be understood that although for purposes of illustration, one satellite 145 is shown as the source of the NIST broadcast signal for both sites A&B, it is also possible for each site to use a different orbiting satellite (any one of the twenty-four (24) operational satellites). Once the clocks 105, 106 are in substantial synchronization, reference time data is forwarded to the respective computers 101,108 and in particular to the simulation software 102, 107 which uses the time base reference for calculating network performance profiles. More specifically, and in order to provide a time resolution of 10 milliseconds, an interrupt handler may be installed in the present embodiment in place of a default clock tick interrupt (INT8-IRQ0). The internal clock resident in the CPUs of computers 101, 108 are then re-programmed to cause an interrupt every 10 milliseconds. The default clock tick interrupt is chained to maintain the integrity of the MS-DOS™ time of day service. A global variable is incremented for every clock tick and is used by computers 101, 108 and software 105, 106 as a time base reference.

To establish a network profile for a given destination, real-time data will be transmitted and analyzed by the network simulation systems. In the embodiment shown in Fig.2, the ping (Packet Internet Groper) utility will be used to query the remote Hong Kong site B and to ensure that a connection is active. The ping utility is available in most operating systems that implement TCP/IP. More importantly, the ping utility will be used as the basis for which the simulation software 102, 107 at both sites A & B will use to determine the efficiency and accuracy of data transfer between both sites A & B.

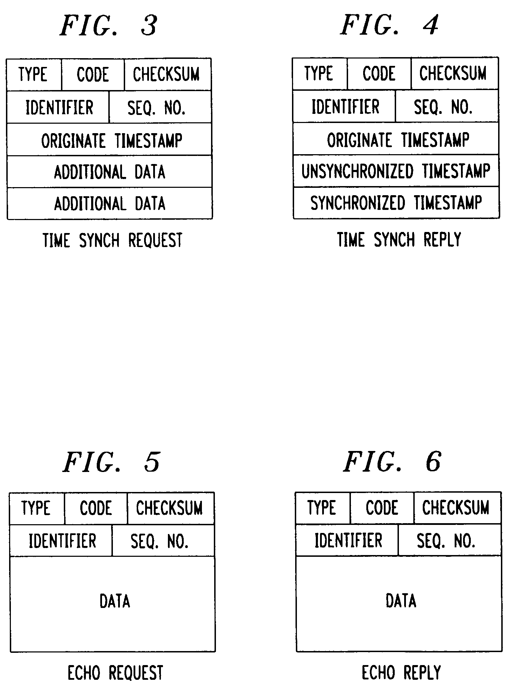

In operation, the ping utility is used to send out Internet Control Message Protocol (ICMP) type messages to the remote site B. In the embodiment as shown in Fig. 2, simulation software 102 preferably initiates communication with the remote site B by sending a time sync request to maximize the synchronization of both sites A & B. As shown in Fig. 3, the time sync message layout incorporates the use of a format similar to that used in an ICMP type 13 message time request, except that the content of the fields have been modified to accommodate the operating needs of the network simulator. For example, values for the type field are chosen to distinguish the message from a standard ICMP message and to designate whether the message is a time sync request or a time sync reply- in the present embodiment the values 23 & 24 were chosen to designate a time synch request and reply, respectively. The code field is used to designate the remote and local clock status. More specifically, the code field is used to report the availability of the clock and the quality of the time being used (i.e., currently synchronized to GPS). The Checksum field contains the one's complement of the one's complement of the sum of the ICMP message, starting with the Type field. The Identifier and Sequence fields are used to identify and to aid in the matching of time sync requests and replies. In the time sync request format shown, the message includes an originating timestamp, as well as additional fields reserved other connect time data, such as time of last NIST update or any other data interpretable by Site A or B. Although the time data shown in the present embodiment uses an originating timestamp and provides for the use of other data fields, it should be understood that the number of fields may be varied and modified to accommodate network protocol and the needs of the network. For purposes of the present embodiment, the originating timestamp is the synchronized time, when site A sent the message to site B.

The remote site B responds with a time sync reply, after the remote sites time base reference has been updated. The update can take the form of a short update directly from the clock 105 or an update from clock 105 requiring that clock 105 reset itself once more according to the NIST broadcast signal. The type of update will depend on the on the type of synch request made as noted in the type field. Once the remote site has update its system, a time sync reply message is formulated. As shown in Fig. 4, the reply is similar in format to a timestamp reply (type 14 ICMP message). To create the time sync reply, the source and destination addresses are reversed, the type code changed to designate a reply (i.e., 24) and the checksum recomputed. To identify the reply as a response to a particular time sync request, the reply message preferably retains the same identifier and sequence numbers when the message is transmitted back to the originating site. In addition, to the originate timestamp, the reply message contains, an unsynchronized and a synchronized timestamp. The unsynchronized time stamp is the time the remote site would have reported if the remote site had not been re-synchronized. The synchronized timestamp is the time the remote site sent the reply after re-synchronization. Any difference found in the synchronized and unsynchronized timestamps is used to determine the clock drift of the remote system.

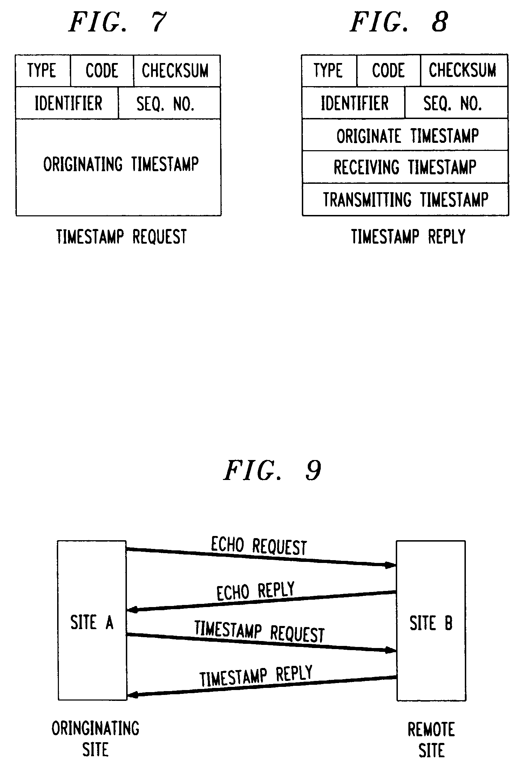

Once the network simulation systems have been synchronized, the originating site initiates the test sequence by transmitting a series of echo and timestamp requests to the remote site as shown in Fig. 9 . More specifically, the originating site in the present embodiment initially generates and transmits an echo requests (ICMP type 8), and in response, receives an echo reply (ICMP type 0) from the remote test site B. The echo request and echo reply messages are used herein to provide a means of using ICMP to handle the echoing of information between a remote host and an originating host. As shown in Fig. 9, site A initiates the test by transmitting an echo request message as shown in Fig. 5. The Type field for purposes of an originating message is set to a value of eight (8) in order to identify the message as an echo request to site B. Once site B receives the message, it places a zero (0) value in the Type field to identify the response as an echo reply. In ICMP echo messages, the code fields should be set to zero (0) since this is by convention, the default value. The checksum field contains the a 16-bit value of the one's complement of the sum of the ICMP message, starting with the Type field. The identifier field is used like a port in TCP or UDP to identify a session while the sequence field is used to identify the particular transmission during a session and is incremented like a counter on each subsequent echo request which is transmitted. The echo reply message will use the same identifier and sequence number received in order to match the sent messages with those received at site A.

In response to the echo request, site B generates an echo reply(ICMP type 0) consistent with standard ICMP fields. As shown in Fig.6, the echo reply retransmits the received data as well as the identifier and sequence numbers in order to match the echo reply with the corresponding echo request. In this manner, a determination can be made as to the extent of packet loss and packet shuffle. Although in the above embodiment, data is retransmitted to the originating site to determine performance, a one-way analysis can be conducted by having sites A & B operate under a predetermined test script and under a predetermined set of data. Under such a mode of operation, site A transmits a known set of data to site B. By knowing the sequence and the data to be transmitted, site B can determine the one way performance of site A to site B. To make the one way performance evaluation of Site B to Site A, site A can either assess the round trip performance of the link and extract the performance of the link attributable to the transmission from Site A to Site B and site B to Site A, or have site B initiate its own one way test as discussed above. In either mode of operation, it is preferable that both sites record all performance data (one and two way). In particular, each site should record transmit and receive times for each message received or transmitted.

To determine time delay, originating site A transmits a timestamp request (ICMP type 13) in accordance with the ICMP message format as shown in Fig. 7. The fields shown in Fig. 7 are substantially the same as those referenced in Figs 3 & 5. For example the Type field designates the type of message being transmitted (i.e., Type 13= Timestamp Request, Type 14= Timestamp Reply). The Identifier and Sequence fields, as previously explained, are used to aid in matching or correlating the Timestamp requests with Timestamp replies. As in the Fig.5, the Code field is set to zero (0) and the Checksum field is calculated by taking the one's complement of the one's complement sum of the ICMP message starting with the ICMP Type. The originating timestamp data is the synchronized time at which the timestamp request was sent from the originating site. In response, Site B answers with a standard Timestamp reply (ICMP type 14) in which the Identifier and Sequence fields correspond with those from the Timestamp request. Moreover, the Timestamp reply incorpoates in addition to the originating timestamp received from Site A, Site B adds the time at which the timestamp request was received and the time at which the timestamp reply was sent to the requesting site. The times noted in the reply are synchronized times fetched from the time base reference. Accordingly, Site A is able to determine one and two way delays as well as assess the processing time at the remote site.

Although Fig.9 shows an echo sequence (type 8,0) followed by a timestamp sequence (type 13, 14), it should be understood that during remote testing of site B, Site A may initiate a test sequence during which several consecutive echo requests are first transmitted before a timestamp request is sent to the remote Site B. The sequence and number of either echo or timestamp requests rest largely, on the objective of the tests conducted. If delay is of primary concern, timestamp requests may the only message type transmitted during testing. Hence, the message content and sequence may be modified to verify any performance criteria.

In an alternate embodiment, the first three fields of the timestamp request (as shown in Fig. 7) are in form substantially as previously discussed above. However, the content of the next three fields is different from standard Internet protocol in that the Identifier, Sequence No., and Originating Timestamp are not fields relating to the the timestamp request as a separate message, but rather related to a particular echo request sent by the originating site. For example, if an echo request and reply sequence had been previously communicated having an Identifier=1000 and a Sequence No.= 2000, a subsequent timestamp request having an Identifier=1000 and a Sequence No.=2000 and including the originating time of that echo request is sent to Site B in order elicit a response particular to the echo request and reply sequence having like identifiers and sequence number. The timestamp reply conforms to standard timestamp replies (ICMP type 14), however, the content of the reply will relate to the originating and receive time of the echo request, and the transmit time of the echo reply. Data stored by the remote site for each transaction is accessed and used at Site B to respond to a timestamp request relating to a previous echo sequence. In this manner, one way and two way delay times can be reported back to the originating site, for each of specific echo requests and replies transmitted.

Preferably, a number of these echo and timestamp requests are made in order for the originating site to acquire significant data representative of network performance at any given time. For example, an operator at site A initiates the simulation software and specifies the site to be tested, the packet size and the number of times the remote site B should be echoed. In response the software utility at site A executes the command and transmits a series of echo and timestamp requests. Once the request and reply sequence is concluded, the network simulation system at site A reports a summary of the network performance. An illustrative report is shown below:

**Table I**

| AT&T Internet Network Analysis | | |
|---|---|---|
| Ping Hngkng 64 data bytes | | |
| 64 bytes from 123.1.123.456: ms | icmp_ seq=0. | rttime= 155. |
| 64 bytes from 123.1.123.456: ms | icmp_ seq=1. | rttime= 145. |
| 64 bytes from 123.1.123.456: ms | icmp_ seq=2. | rttime= 134. |
| 64 bytes from 123.1.123.456: ms | icmp_ seq=3. | rttime= 199. |
| 64 bytes from 123.1.123.456: ms | icmp_ seq=4. | rttime= 183. |
| 64 bytes from 123.1.123.456: ms | icmp_ seq=5. | rttime= 178. |
| 64 bytes from 123.1.123.456: ms | icmp_ seq=6. | rttime= 174. |
| 64 bytes from 123.1.123.456: ms | icmp_ seq=7. | rttime= 166. |
| 64 bytes from 123.1.123.456: ms | icmp_ seq=8. | rttime= 186. |
| ------123.1.123.456: Ping Statistics------ | | |
| 100 packets transmitted, 88 packets received, 12% packet loss 5 packets out of sequence, 2 pks out of seq. NJ to Hngkng 3 pks out of seq. Hngkng to NJ round-trip (ms) min/avg/max= 112/181/450 NJ to Hngkng (ms) min/avg/max= 72/94/260 Hngkng to NJ (ms) min/avg/max=50/87/190 | | |

Although in the present embodiment, the system utilizes a separate request for each reply, the present invention also contemplates the use of a single request which would through software modification at a remote site elicit multiple replies. In particular, an echo request would elicit an echo and timestamp reply without the need for a separate timestamp request.

Once network performance data has been received by site A, the data is stored and used to test network components. As shown in Fig. 2, devices under test 125, 126 are connected to computer 101 via network simulation ports 113. Based on the data acquired for a particular destination, a network profile of the link is used to simulate the network environment. For example, the NJ to Hong Kong link can now be simulated by using previously capture network performance data. To test the devices, the simulation software 102, processes received data from device 126 in conformity with the network profile of the link. Accordingly, data sent from device 126 (NJ) to device 125 (Hong Kong) will experience, for example, the same operational delays, packet loss, and packet shuffle as experienced by sites A & B during the actual transmission of data from site A to site B.

In addition to the use of network performance data to test the performance of a device, an operator of the network test system can manually modify network performance parameters or evoke other test routines in conjunction with the above mentioned test practices, to test the limits of the device under test.

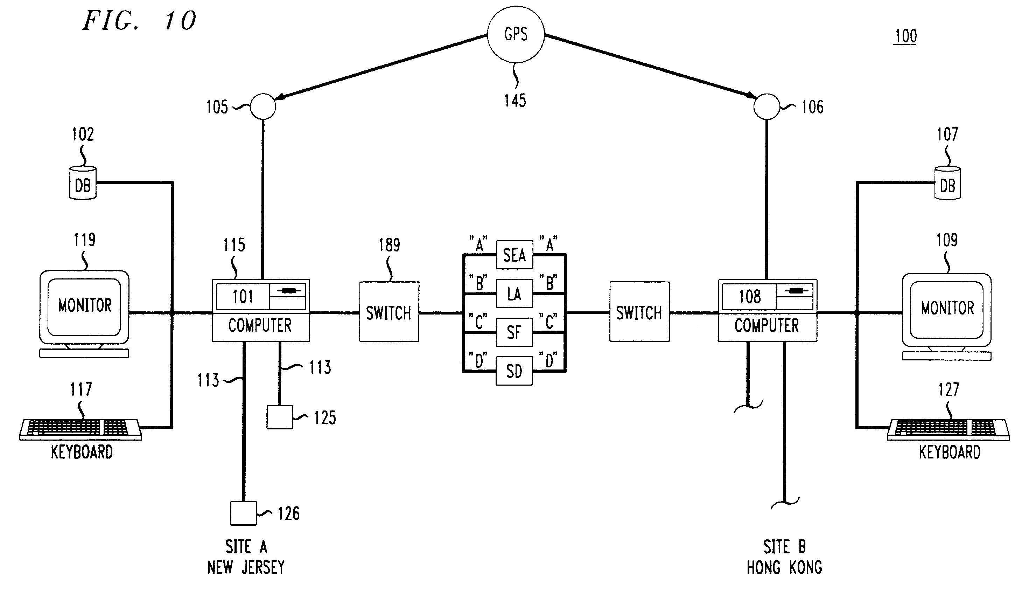

In another embodiment of the present invention, the network test system as shown in Fig. 10, transmits network performance data to a network switch 189 in order for switch 189 to determine whether there is a need to change switching patterns. As in the previous embodiment of the present invention, the network test system acquires network performance data by transmitting a series of test messages and by analyzing the received data at the remote and originating sites. As shown in Fig. 10, the network test system is substantially the same as that shown in Fig. 2, except that the network test system connects to a network switch. For purposes of illustration, a switched network is shown wherein several routes are available for a particular destination. As used herein, a switch is any device capable of routing communications traffic (i.e., telephone switches, routers, ATM switches, frame relays, and X.25 switching nodes). In the present embodiment, the network test system analyzes alternative routing patterns in order to enhance network performance under alternative routing patterns.

In cooperation with network switch 189, the network test system at site A initiates one or more messages to site B in order to determine the better routing path network traffic should take in order to enhance network performance. Initially, the network test system initiates a test series to site B via path A. As shown, path A routes traffic through an intermediary switch in Seattle before reaching the Hong Kong destination. Site B (Hong Kong) like the earlier embodiment, comprises a similar network test system capable of cooperating with site A to establish a network performance profile via Path A. Prior to the transmission of test data, and to ensure near real-time synchronization of the clocks 105, 106 at sites A & B, the network test system requests site B to re-synchronize clock 106 by once again sensing the NIST broadcast signal. In addition, site A relays to site B, the test protocol to be followed and in particular the test data to be received at the remote site. By defining the test script to be followed, the remote site is able to conduct one way network performance and relay such information back to the originating site. More specifically, by knowing the exact data to be sent prior to transmission, the remote site is able to, depending on the network, calculate one way packet loss, packet shuffle, delays, and bit or message error rates. Preferably, site A establishes the test protocol by sending a test protocol code to the remote site.

Once the clocks are reset and protocols established, a new reference time base is transmitted to computers 101, 108. Test data is then forward to site B where it is received, analyzed and where appropriate, a response generated back to site A. As in the previous embodiment, the one way performance data is stored at site B and forwarded to Site A. In like manner, paths B & C are also tested and network path profiles established. Thereafter, software 102 determines the better routing path communications traffic through switch 189 should take under the available alternatives and forwards such recommendations to the network switch 189 where a determination is made whether to alter the current switching pattern.

For example, in the event that path D experiences an inordinate amount of delay in the transmission of data between site A and Site B, (via San Diego) network switch 189 calls upon network test system at site A to simulate the network protocol and message format necessary and to test alternative network links to Hong Kong. Based on the results of the tests conducted, the network test system may for example conclude that based on the network path profiles tested, the NJ-SF-HNGKNG link experienced the least amount of delay and is therefore the better route to take in order to increase traffic throughput. The network test system at site A would designate path C as the preferred alternate route, and inform the network switch 1001 of the preferred changes to the current routing pattern. Network switch 189 may or may not alter its traffic pattern depending on factors known at the time the switch receives the results of such tests. Nevertheless, in this mode of operation, a network switch is able to more effectively, route traffic based on actual data resulting from tests conducted over the network and as measured by a highly reliable and accurate timing mechanism and network test system.

The foregoing description of embodiments of the present invention should be considered as illustrative and not as limiting. The different types of communications networks, protocols, switching devices, and message formats are indicative of the variations to the system and methods of the present invention which may be used without departing from the scope of the invention. Various other changes and modifications will occur to those skilled in the art for accomplishing the same result, and for operating in substantially the same way, without departing from the true scope of the invention as defined in the claims appended hereto. Where technical features mentioned in any claim are followed by reference signs, those reference signs have been included for the sole purpose of increasing the intelligibility of the claims and accordingly, such reference signs do not have any limiting effect on the scope of each element indentified by way of example by such reference signs.

## Claims

1. A network test system for testing a network component comprising:
first memory means for storing and accessing network operational data;
second memory means for storing and accessing network operational data;
first computer means for transmitting and receiving data on said network, said first computer means in communications with said first memory means;
remote second computer means for transmitting and receiving data on said network, said second computer means in communication with said first computer means and said second memory means; and
clocking means for receiving a broadcast signal and for synchronizing said first and second computer means to a

2. A network test system according to claim 1 wherein said clocking means includes a first global positioning satellite receiver in communications with said first computer means and a second global positioning satellite receiver in communications with said second computer means to receive said broadcast signal.

3. A network test system according to claim 1 wherein said clocking means includes a global positioning satellite for transmitting said broadcast signal.

4. A network test system according to claim 1 wherein said first computer means further comprises a means for processing data to said network component according to said network operational data.

5. A network test system for testing a network component comprising:
first memory means for storing and accessing network operational data;
second memory means for storing and accessing network operational data;
first computer means for transmitting and receiving data on said network, said first computer means in communications with said first memory means;
remote second computer means for transmitting and receiving data on said network, said second computer means in communication with said first computer means and said second memory means; and
clocking means for receiving a broadcast signal and for synchronizing said first and second computer means to within 10 ms of a common time reference.

6. A network test system according to claim 5 wherein said clocking means includes a first global positioning satellite receiver in communications with said first computer means and a second global positioning satellite receiver in communications with said second computer means to receive said broadcast signal.

7. A network test system according to claim 5 wherein said clocking means includes a global positioning satellite for transmitting said broadcast signal.

8. A network test system according to claim 5 wherein said first computer means further comprises a means for processing data to said network component according to said network operational data.

9. A system for testing a device for use on the Internet comprising;
first memory means for storing and accessing network operational data;
second memory means for storing and accessing network operational data;
first processing means for transmitting and receiving data on said network, said first processing means in communications with said first memory means;
remote second processing means for receiving and transmitting data on said network, said second computer means in communication with first processing means and said second memory means; and
clocking means for receiving a satellite broadcast signal and for synchronizing said first and second processing means to within 10 ms of a common time reference.

10. A simulator for simulating the Internet and for testing a network component, said simulator comprising:
a first memory means for storing and accessing Internet performance data;
second memory means for storing and accessing Internet performance data;
first processing means for transmitting and receiving data on the Internet, said first processing means in communications with said first memory means ;
second processing means for receiving said data from said first processing means, said second processing means comprising a means for generating Internet performance profile data, said second processing means in communications with said second memory means for storing said Internet performance data;
clocking means for receiving a broadcast signal and synchronizing said first and second processing means to a common reference time;
means for processing data to said network component according to said Internet performance data.

11. A system for testing a device in a simulated Internet environment, said system comprising:
memory means for storing an Internet performance profile;
a first processing means for transmitting data on the Internet;
a second processing means for receiving said data from said first processing means, said second processing means comprising a means for generating a Internet performance profile, said second processing means in communications with said first processing means for storing said Internet profile on said memory means;
a clocking means for receiving a broadcast signal and synchronizing said first and second processing means to a reference time; and
a means for processing data to said device according to said Internet Performance profile.

12. A network test system for testing a network component, comprising:
a first processing means for emulating a first network component and for transmitting a test message;
a second processing means for emulating a second network component and for receiving and processing said test message;
a remote master clock for keeping a time reference;
a first clock means in communications with said first processing means and said master clock; and
a second clock means in communications with said second processing means, said first and second clock means in substantial synchronization with said master clock.

13. A network test system for testing the performance of a device comprising:
a first computer means for processing network messages;
a first storage means in communications with said first computer means for storing network performance data;
a first clock means for storing a time base reference and updating said first computer means;
a second computer means for processing network messages;
a second storage means in communications with said second computer means for storing network performance data;
a second clock means for storing a time base reference and updating said second computer means; and
a master clock means for transmitting a time base reference to said first and second clock means, said first and second clocks in substantial synchronization with said mater clock means and said first and second computer means in communications with each other for testing the performance of said network.

14. A network test system for testing the performance of a device comprising:
a first computer means for processing network messages;
a first storage means in communications with said first computer means for storing network performance data;
a first clock means for storing a time base reference and updating said first computer means;
a network switch in communications with said first computer means;
a second computer means for processing network messages;
a second storage means in communications with said second computer means for storing network performance data;
a second clock means for storing a time base reference and updating said second computer means; and
a master clock means for transmitting a time base reference to said first and second clock means, said first and second computer means in communications with each other so as to determine alternate routing paths that would enhance the performance of the network.
